# EUROPEAN PATENT APPLICATION

(11) **EP 4 300 672 A1**
(43) Date of publication of application: **03.01.2024**
(21) Application number: 22827317.3
(22) Date of filing: 27.05.2022
(51) Int. Cl.: H01M 50/169, H01M 50/166, H01M 50/15, H01M 50/103

(54) **HOUSING, BATTERY AND ELECTRONIC DEVICE**

(30) Priority: 23.06.2021 CN 202121403374 U
(71) Applicant: BYD Company Limited, Shenzhen, Guangdong 518118 (CN)
(72) Inventor: WANG, Bing, Shenzhen, Guangdong 518118 (CN); LIU, Wei, Shenzhen, Guangdong 518118 (CN); ZHANG, Ke, Shenzhen, Guangdong 518118 (CN); HU, Haibo, Shenzhen, Guangdong 518118 (CN)
(74) Representative: DehnsGermany Partnerschaft von Patentanwälten
(86) International application number: PCT/CN2022/095568
(87) International publication number: WO 2022/267820

(57) **Abstract**

Provided are a housing, a battery, and an electronic device. The housing (10) is configured to accommodate an electrode core. The housing (10) includes a peripheral wall (11) and a first cover plate (131). The peripheral wall (11) is provided with a first opening (111). A reserved portion (1311) is arranged on a periphery of the first cover plate (131). The reserved portion (1311) is configured to be melted to form a melted edge. The first cover plate (131) is configured to be bonded with the peripheral wall (11) through the melted edge (1313) to close the first opening (111).

## Description

### CROSS-REFERENCE TO RELATED APPLICATIONS

This disclosure claims the priority to Chinese patent application No. 202121403374.X, filed on June 23, 2021 and entitled "HOUSING AND BATTERY", which is incorporated herein by reference in its entirety.

### FIELD

The present disclosure relates to the field of batteries, and more specifically, to a housing, a battery having the housing, and an electronic device having the battery.

### BACKGROUND

In the related art, the battery is sealed by welding at flange edges. The existence of the flange edges will take up the assembly space and reduce the energy density of the battery.

For example, Publication Patent No. 201711165151.2 discloses a packaging housing for a metal housing battery and a battery. The packaging housing includes a first housing and a second housing. The first housing includes a top and a first side wall. The first side wall extends from top to bottom. The first side wall has a first flange extending outwards. The first side wall forms an opening. The second housing includes a middle portion and a second flange extending outwards from the middle portion. The middle portion is configured to cover the opening. A material of the first housing and the second housing is an alloy. A battery core is accommodated in the packaging housing. The first flange and the second flange are welded for sealing.

According to the packaging case in such a form, the weld is at the first flange and the second flange of the housing. In order to ensure effective sealing by welding, the existence of the flanges of the housing may take up the assembly space, causing the reduction in the volume for effective capacity of the battery and reducing the battery capacity.

### SUMMARY

The present disclosure aims to solve the technical problem that the flange edges take up the assembly space of the battery in the related art.

In one aspect, the present disclosure provides a housing, configured to accommodate an electrode core. The housing includes a peripheral wall and a first cover plate. The peripheral wall is provided with a first opening. A reserved portion is arranged on a periphery of the first cover plate. The reserved portion is configured to be melted to form a melted edge. The first cover plate is configured to be bonded with the peripheral wall through the melted edge to close the first opening.

In an embodiment, a material of the peripheral wall is stainless steel.

In an embodiment, a thickness of the peripheral wall is 30 to 150 µm.

In an embodiment, a material of the first cover plate is stainless steel.

In an embodiment, the reserved portion is a portion of the first cover plate protruding from an outer surface of the peripheral wall along a peripheral direction of the peripheral wall when the first cover plate covers the first opening.

In an embodiment, a height of the reserved portion protruding from the peripheral wall along the peripheral direction of the peripheral wall is 50 µm to 300 µm.

In an embodiment, a thickness of the reserved portion is 30 to 300 µm.

In an embodiment, a boss is arranged on the first cover plate.

In an embodiment, a peripheral dimension of the boss is equivalent to that of the first opening, such that when the first cover plate is assembled to the peripheral wall, a periphery of the boss abuts against the peripheral wall.

In an embodiment, the first cover plate includes a first plate body and a second plate body. The reserved portion is arranged on the first plate body, and the second plate body is welded to the first plate body to form the boss.

In an embodiment, a thickness of the first plate body is 30 to 200 µm.

In an embodiment, a thickness of the second plate body is 100 to 500 µm.

In an embodiment, the housing includes a second cover plate, and the peripheral wall is provided with a second opening opposite to the first opening. The second cover plate is configured to cover the second opening.

In an embodiment, the peripheral wall is provided with a weld extending to the first opening and the second opening.

In an embodiment, the peripheral wall is substantially in a shape of a cuboid. The peripheral wall includes two first side plates arranged opposite to each other and two second side plates arranged opposite to each other. Areas of the first opening and the second opening are less than areas of the first side plate and the second side plate.

In an embodiment, the peripheral wall is provided with a weld extending to the first opening and the second opening. The area of the first side plate is less than the area of the second side plate. The weld is provided on the first side plate.

In an embodiment, a relationship between a height H1 of the reserved portion, a reinforcement H2 of the melted edge, a width W of the melted edge, and the T2 thickness of the reserved portion is: H1=(π×(H2+W/2)2-W2)/4T2.

In another aspect, the present disclosure provides a battery, including a housing as described above and the electrode core accommodated in the housing. The first cover plate is bonded with the peripheral wall through the melted edge to close the first opening.

In an embodiment, the melted edge protrudes along the peripheral direction of the peripheral wall.

In an embodiment, the reinforcement of the melted edge protruding along the peripheral direction of the peripheral wall is less than 200 µm.

In an embodiment, at least part of the melted edge abuts against an outer side surface of the peripheral wall.

In an embodiment, one end of the peripheral wall facing the first cover plate is located between the melted edge and the boss.

In still another aspect, the present disclosure provides an electronic device, including a battery as described above.

Based on the above, the present disclosure provides the housing and the battery. The housing includes the peripheral wall and the first cover plate. The peripheral wall is provided with the first opening. The reserved portion with a predetermined size is arranged on the periphery of the first cover plate according to needs, so that when the first cover plate is sealed with the peripheral wall, the reserved portion is melted to form the melted edge with a desired size. In the battery, the first cover plate is bonded with the peripheral wall through the melted edge to close the first opening, so that the first cover plate can be sealed with the peripheral wall on the premise that the melted edge does not take up too much space, thereby improving the energy density of the whole battery.

### BRIEF DESCRIPTION OF THE DRAWINGS

The foregoing and/or additional aspects and advantages of the present disclosure will become apparent and comprehensible in the description of the embodiments made with reference to the following accompanying drawings.
FIG. 1 is a three-dimensional view of a housing according to an implementation of the present disclosure;
FIG. 2 is a schematic view showing assembly of the housing shown in FIG. 1;
FIG. 3 is a partial enlarged view of A in FIG. 2;
FIG. 4 is a schematic view showing sealing of the housing shown in FIG. 1;
FIG. 5 is a partial enlarged view of B in FIG. 4;
FIG. 6 is a three-dimensional view of a battery according to an implementation of the present disclosure;
FIG. 7 is a top view of a first cover plate of the housing shown in FIG. 1;
FIG. 8 is a side view of the first cover plate shown in FIG. 7; and
FIG. 9 is a three-dimensional view of a housing according to another implementation of the present disclosure.

### Reference signs:

10- housing;
11-peripheral wall, 111-first opening, 112-second opening, 115-weld, 1171-first side plate, 1172-second side plate;
131-first cover plate, 1311-reserved portion, 13121-first plate body, 13122-second plate body, 1313-melted edge, 1315-terminal, 1317-electrolyte solution filling port, 1319-boss;
132-second cover plate;
20-battery;
T1-thickness of peripheral wall, T2-thickness of reserved portion, H1-height of reserved portion, H2-reinforcement of melted edge, W-width of melted edge.

### DETAILED DESCRIPTION

Embodiments of the present disclosure are described in detail below, and examples of the embodiments are shown in accompanying drawings, where the same or similar elements or the elements having same or similar functions are denoted by the same or similar reference numerals throughout the description. The embodiments described below with reference to the accompanying drawings are exemplary, and are intended to explain the present disclosure and cannot be construed as a limitation to the present disclosure.

In the description of the present disclosure, it should be understood that the orientation or positional relationship indicated by the terms "upper", "lower", etc. is based on the orientation or positional relationship shown in the accompanying drawings, it is only for the convenience of describing the present disclosure and simplifying the description, rather than indicating or implying that the apparatus or element referred to must have a particular orientation or be constructed and operated in a particular orientation, and therefore, should not be construed as a limitation of the present disclosure.

Before describing the embodiments in detail, it should be understood that the present disclosure is not limited to the detailed structure or arrangement of elements described below in the present disclosure or in the accompanying drawings. The present disclosure may be embodiments realized in other ways. Moreover, it should be understood that the expressions and terms used herein are intended to be descriptive only and should not be interpreted in a limiting way. The expressions such as "include", "comprise", "have" and the like as used herein are intended to include the items listed thereafter, their equivalents, and other additional items. In particular, when describing "an element", the present disclosure does not limit the number of the elements to one, which may also include more than one.

The present disclosure provides a housing 10 and a battery 20 having the housing 10.

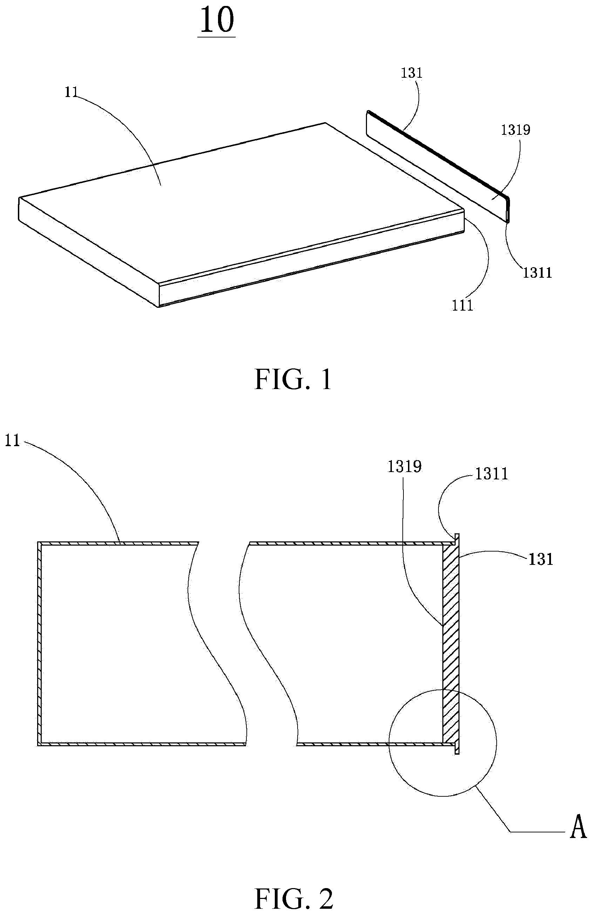

As shown in FIG. 1, the housing 10 of the present disclosure is configured to accommodate an electrode core. The housing 10 includes a peripheral wall 11 and a first cover plate 131. The peripheral wall 11 is provided with a first opening 111. The first cover plate 131 is configured to cover the first opening 111.

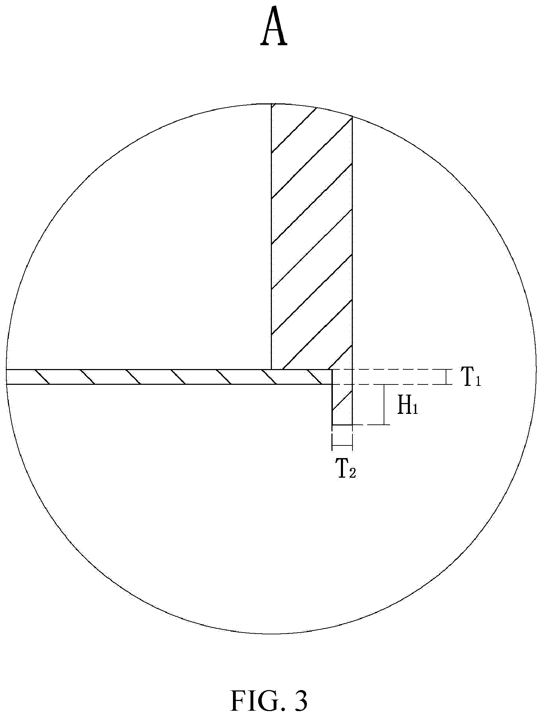

Referring to FIG. 2 and FIG. 3, a reserved portion 1311 is arranged on a periphery of the first cover plate 131. The reserved portion 1311 is arranged according to dimensions of the peripheral wall 11 (thickness T1 of the peripheral wall 11 and dimensions of the first opening 111). The reserved portion 1311 is a portion of the first cover plate 131 protruding from the peripheral wall 11 along a peripheral direction of the peripheral wall 11 when the first cover plate 131 covers the first opening 111. It should be understood that the "portion of the first cover plate 131 protruding from the peripheral wall 11 along a peripheral direction of the peripheral wall 11 " refers to a portion of the first cover plate 131 protruding from an outer surface of the peripheral wall 11. As shown in FIG. 3, a height of the reserved portion 1311 is H1.

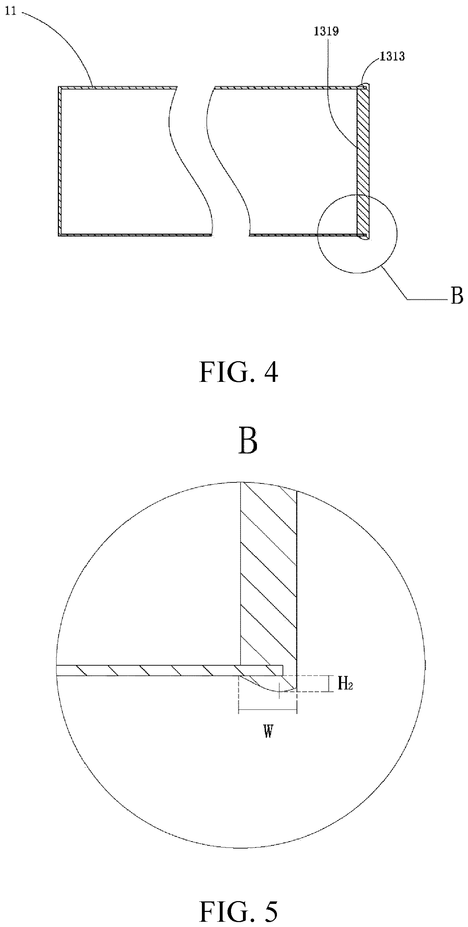

Referring to FIG. 4 and FIG. 5, the reserved portion 1311 is configured to be melted to form a melted edge 1313. The first cover plate 131 is bonded with the peripheral wall 11 through the melted edge 1313. The reserved portion 1311 is arranged around the periphery of the first cover plate 131, so that the melted edge 1313 is formed around the periphery of the first cover plate 131, thereby covering a connection gap between the first cover plate 131 and the peripheral wall 11. The whole periphery of the first cover plate 131 is bonded with the peripheral wall 11 through the melted edge 1313 so as to close the first opening 111.

A part of the material is reserved according to needs as the reserved portion 1311 during the manufacture of the first cover plate 131. The reserved portion 1311 is melted by laser welding or the like to form the melted edge 1313, thereby realizing sealing connection between the first cover plate 131 and the peripheral wall 11. The melted edge 1313 only has a very small reinforcement H2 relative to the outer surface of the peripheral wall 11. Compared with the related art which realizes sealing by flange edges, in the solution of the present disclosure, the sealing structure takes up less assembly space on the premise of ensuring the sealing between the first cover plate 131 and the peripheral wall 11, thereby effectively improving the energy density of the battery. By arranging the reserved portion 1311, a peripheral dimension of the first cover plate 131 can be greater than a peripheral dimension of the peripheral wall 11, which facilitates the assembly between the first cover plate 131 and the peripheral wall 11, thereby preventing the first cover plate 131 from falling into the peripheral wall 11 when it is positioned with the peripheral wall 11, reducing the process difficulty, and improving the yield.

Further, a material of the peripheral wall 11 is stainless steel. Compared with aluminum used as a battery case material, the stainless steel has higher strength, and is suitable to make the peripheral wall 11 thinner. Preferably, the peripheral wall 11 is made of 316L stainless steel. In an embodiment, the thickness T1 of the peripheral wall 11 is 30 to 150 µm, so that less space is taken up on the premise of satisfying the strength requirement of the housing 10. Thus, the housing 10 can accommodate the electrode core with a larger volume, thereby improving the capacity of the formed battery.

In one embodiment, the height H1 of the reserved portion 1311 protruding from the peripheral wall 11 along the peripheral direction of the peripheral wall 11 is 50 µm to 300 µm.

A dimensional tolerance of the first opening 111 is about ±50 µm, and it is stipulated that the reserved portion 1311 protrudes from the peripheral wall 11 along the peripheral direction of the peripheral wall 11 by at least 50 µm, which can prevent the first cover plate 131 from falling into the peripheral wall 11 when it is positioned with the peripheral wall 11, thereby facilitating the sealing between the first cover plate 131 and the peripheral wall 11 by welding.

If the reserved portion 1311 protrudes from the peripheral wall 11 along the peripheral direction of the peripheral wall 11 by more than 300 µm, the reserved portion 1311 will be oversized. First, it will be difficult for the laser to completely melt the reserved portion 1311, which increases the machining difficulty. Moreover, there will be an excessive reinforcement of the formed melted edge 1313 taking up the space. In addition, in order to melt the reserved portion 1311, it is required to improve the laser energy. For the peripheral wall 11 with a less thickness, an excessive laser energy will make the peripheral wall 11 at the risk of thermal deformation or even damage.

In an embodiment, a material of the first cover plate 131 is stainless steel, which has higher strength, and is suitable to make the first cover plate 131 thinner, thus reducing the space taken up. Preferably, the first cover plate 131 is made of 316L stainless steel. Both the first cover plate 131 and the peripheral wall 11 are made of stainless steel, which can improve the welding effect between the first cover plate and the peripheral wall.

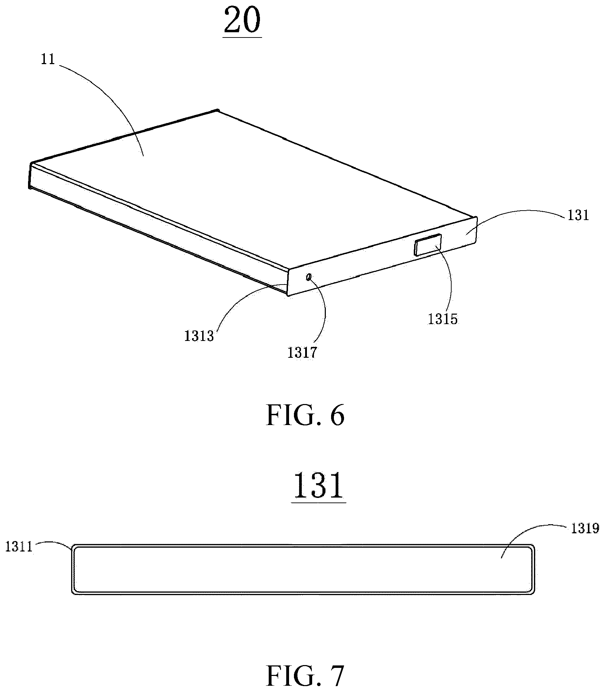

Referring to FIG. 6, different from the peripheral wall 11, a terminal 1315 and an electrolyte solution filling port 1317 are further required to run through the first cover plate 131. In this case, a boss 1319 is arranged on the first cover plate 131 for local thickening to improve the structural strength of the first cover plate 131 at corresponding positions, for example, at positions corresponding to the terminal 1315 and the electrolyte solution filling port 1317, thereby effectively preventing the first cover plate 131 from deformation when it is perforated, and improving the product quality.

Further, the boss 1319 is fitted with the first opening 111, i.e., a shape of the boss 1319 is similar to that of the first opening 111, and a peripheral dimension of the boss 1319 is equivalent to that of the first opening 111, such that when the first cover plate 131 is assembled to the peripheral wall 11, the boss 1319 serves as a guide member, and a periphery of the boss 1319 abuts against the peripheral wall 11. Thus, the first cover plate 131 is guided and positioned when it is assembled, which is conducive to the welding between the first cover plate 131 and the peripheral wall 11. It should be understood that "a peripheral dimension of the boss 1319 is equivalent to that of the first opening 111" means that the peripheral dimension of the boss 1319 is slightly greater than, equal to, or slightly less than the peripheral dimension of the first opening 111. For example, in the embodiment shown in FIG. 1 to FIG. 3, the first opening 111 is rectangular, so the boss 1319 is also rectangular, and a length and a width of the boss 1319 are respectively ±20 µm of a length and a width of the first opening 111. In this way, through a sliding connection or an interference fit between the boss 1319 and the peripheral wall 11, the first cover plate 131 can be guided and positioned when it is assembled. The present disclosure does not limit the ratio of the peripheral dimension of the boss 1319 to the peripheral dimension of the first opening 111, as long as the first cover plate 131 can be guided or positioned through the boss 1319.

In this embodiment, the boss 1319, having a similar shape to the first opening 111 and a slightly greater peripheral dimension than the first opening is arranged in a middle of the first cover plate 131. The boss 1319 is integrally connected with the reserved portion 1311 through a connecting portion (not marked), so that an edge of the first cover plate 131 forms a continuous stepped structure along the peripheral direction. As shown in FIG. 2, when the first cover plate 131 is assembled to the peripheral wall 11, the boss 1319 is located in the peripheral wall 11, and the periphery (i.e., a side surface perpendicular to the connecting portion) of the boss 1319 abuts against an inner side surface of the peripheral wall 11. The connecting portion abuts against an annular surface at the top of the peripheral wall 11. The reserved portion 1311 protrudes from the outer surface of the peripheral wall 11, and the first cover plate 131 is closely connected with the peripheral wall 11. In this way, the quality of subsequent welding between the first cover plate 131 and the peripheral wall 11 can be improved.

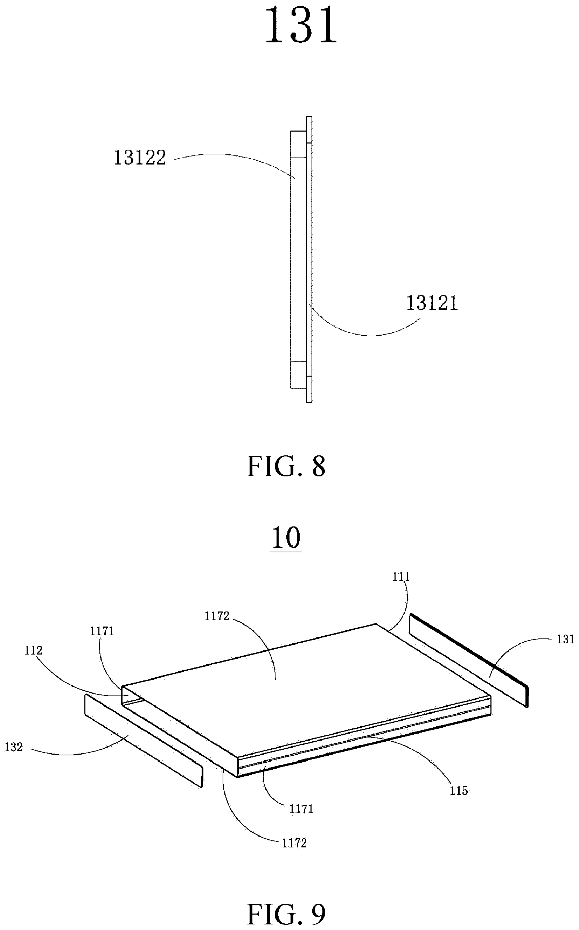

When the first cover plate 131 is made of a material with high hardness such as stainless steel, it is difficult to form the above stepped structure, and especially in a case of small thickness, it is difficult to form a satisfactory right-angled structure. As shown in FIG. 7 and FIG. 8, the first cover plate 131 includes a first plate body 13121 and a second plate body 13122. The reserved portion 1311 is arranged on the first plate body 13121. The first plate body 13121 has a greater peripheral dimension than the second plate body 13122. The second plate body 13122 is welded to the first plate body 13121 to form the boss 1319. By welding the second plate body 13122 to a middle of the first plate body 13121, the process difficulty of forming the continuous stepped structure along the peripheral direction on the edge of the first cover plate 131 is reduced, and the production costs are effectively reduced. Moreover, the stepped structure formed by welding the two plate bodies has high quality, thereby improving the assembly effect between the first cover plate 131 and the peripheral wall 11.

It should be understood that the first cover plate 131 being made of stainless steel is only a specific implementation of the present disclosure. In other embodiments, the two plate bodies may be made of different materials. For example, the first plate body 13121 is made of stainless steel with high strength, and the second plate body 13122 is made of nickel. Alternatively, the first plate body 13121 is made of stainless steel, the second plate body 13122 is made of aluminum, and the two plate bodies are welded through nickel, which can reduce the usage of nickel and steel and reduce the costs. The present disclosure does not limit the materials of the first plate body 13121 and the second plate body 13122, as long as the stepped structure can be formed by welding the two plate bodies.

Further, a thickness of the first plate body 13121 is 30 to 200 µm. The first plate body may have a less thickness as long as the sealing can be realized, which can reduce the space taken up. A thickness of the second plate body 13122 is 100 to 500 µm, preferably 200 to 300 µm. The boss 1319 with larger size can improve the guide and positioning effect, facilitate positioning during the assembly, and improve the strength.

In this embodiment, the thickness T2 of the reserved portion 1311 is 30 µm to 300 µm. If the boss 1319 is arranged on the first cover plate 131, the boss 1319 functions to improve the strength of the first cover plate 131, and the reserved portion 1311 only functions as a seal during the assembly and subsequent formation of the melted edge 1313, then the reserved portion can be made thinner. For example, the thickness T2 of the reserved portion 1311 is 30 µm, so that less space is taken up on the premise of satisfying the strength requirement. If the first cover plate 131 is a single plate body having a uniform thickness, in order to ensure the strength, the whole plate body needs to be thickened. Accordingly, the reserved portion 1311 has a large thickness. For example, the thickness T2 of the reserved portion 1311 is 300 µm. This can reduce the procedures, reduce the machining difficulty and improve the production efficiency on the premise of ensuring the strength of the first cover plate 131.

As shown in FIG. 9, the housing 10 include a second cover plate 132. The peripheral wall 11 is provided with a second opening 112 opposite to the first opening 111. That is, the first opening 111 and the second opening 112 are respectively provided at two ends of the peripheral wall 11 along an axial direction of the peripheral wall 11. The second cover plate 132 is configured to cover the second opening 112. It should be understood that the sealing method and structure of the second cover plate 132 with the peripheral wall 11 are similar to those of the first cover plate 131, and details will not be repeated here.

In order to improve the energy density of the battery, the thickness T1 of the peripheral wall 11 needs to be small. Deep drawing used in the related art for thinning a steel shell is prone to rupture and wrinkling. In this embodiment, it is easy to stretch a whole steel sheet to 30 µm to 150 µm, and the steel sheet of 30 to 150 µm is bent into a cylinder and then welded to form the peripheral wall 11, that is, the peripheral wall 11 is provided with a weld 115 extending to the first opening 111 and the second opening 112. The formed peripheral wall 11 is a thin shell that is unattainable by the existing deep drawing process.

Further, the peripheral wall 11 is substantially in a shape of a cuboid. The peripheral wall 11 includes two first side plates 1171 arranged opposite to each other and two second side plates 1172 arranged opposite to each other. The first side plate 1171 and the second side plate 1172 are connected through a fillet. The two first side plates 1171 and the two second side plates 1172 form the first opening 111 and the second opening 112 provided at the two ends of the peripheral wall 11 along the axial direction. The first opening 111 and the second opening 112 are rectangular, and areas of the first opening 111 and the second opening 112 are less than areas of the first side plate 1171 and the second side plate 1172. That is, the first opening 111 and the second opening 112 are provided on sides of the cuboid formed by the peripheral wall 11 having the smallest area, thereby reducing the influence of the first cover plate 131 and the second cover plate 132 on the energy density of the whole battery.

Preferably, the area of the first side plate 1171 is less than the area of the second side plate 1172, and the weld 115 is provided on the first side plate 1171, thereby reducing the influence of the reinforcement of the weld 115 on a thickness direction of the battery. It should be understood that this is only a preferred implementation of the present disclosure. In other embodiments, the weld 115 may be provided on the second side plate 1172, or the weld 115 may be provided at a joint between the first side plate 1171 and the second side plate 1172, as long as the peripheral wall 11 is provided with the weld 115 extending to the first opening 111 and the second opening 112. The present disclosure does not limit the specific position of the weld 115.

As shown in FIG. 6, the battery 20 of the present disclosure includes the housing 10 and the electrode core (not shown) accommodated in the housing 10. The first cover plate 131 is bonded with the peripheral wall 11 through the melted edge 1313 to close the first opening 111.

The melted edge 1313 protrudes along the peripheral direction of the peripheral wall 11.

Referring to FIG. 3 and FIG. 5, a cross section of the melted edge 1313 is substantially fan-shaped. The melted edge 1313 with the reinforcement H2 and the width W that can satisfy the sealing requirements can be obtained according to material properties of the housing 10 and a voltage difference between the inside and the outside of the battery 20. In this embodiment, the reinforcement H2 of the melted edge 1313 protruding along the peripheral direction of the peripheral wall 11 is less than 200 µm, so that only small space is taken up on the premise of ensuring the sealed connection between the first cover plate 131 and the peripheral wall 11, thereby improving the energy density of the battery 20.

Based on the fact that a sectional area of the reserved portion 1311 before melting is substantially equal to a sectional area of the melted edge 1313 after melting, a relationship between the height H1 of the reserved portion 1311, the reinforcement H2 of the melted edge 1313, the width W of the melted edge 1313, and the thickness T2 of the reserved portion 1311 is established: H1=(π×(H2+W/2)2-W2)/4T2.

In this way, the height H1 of the reserved portion 1311 can be designed according to the desired reinforcement H2 of the melted edge 1313, the width W of the melted edge 1313, and the thickness T2 of the reserved portion 1311.

In one implementation, the melted edge 1313 is formed by melting the reserved portion 1311 of the first cover plate 131, that is, the melted edge 1313 is integrally connected with the first cover plate 131. At least part of the melted edge 1313 abuts against an outer side surface of the peripheral wall 11. A joint between the peripheral wall 11 and the first cover plate 131 does not need to be melted. There is a connection interface between the melted edge 1313 and the peripheral wall 11. The melted edge 1313 connecting the first cover plate 131 and the peripheral wall 11 is formed by melting only the reserved portion 1311 of the first cover plate 131.

As shown in FIG. 4, one end of the peripheral wall 11 facing the first cover plate 131 is located between the melted edge 1313 and the boss 1319. The peripheral wall 11 does not need to be melted. The peripheral wall 11 is clamped by the melted edge 1313 and the boss 1319. Between the first cover plate 131 and the peripheral wall 11, the melted edge 1313 is bonded to the outer side surface of the peripheral wall 11, and the peripheral wall 11 is further clamped by the melted edge 1313 and the boss 1319, which improves the connection strength between the first cover plate 131 and the peripheral wall 11 and further ensures the sealing quality between the first cover plate and the peripheral wall.

Based on the above, the present disclosure provides the housing and the battery. The housing includes the peripheral wall and the first cover plate. The peripheral wall is provided with the first opening. The reserved portion with a predetermined size is arranged on the periphery of the first cover plate according to needs, so that when the first cover plate is sealed with the peripheral wall, the reserved portion is melted to form the melted edge with a desired size. In the battery, the first cover plate is bonded with the peripheral wall through the melted edge to close the first opening, so that the first cover plate can be sealed with the peripheral wall on the premise that the melted edge does not take up too much space, thereby improving the energy density of the whole battery.

In addition, the present disclosure further provides an electronic device, including the battery described above.

The concepts described herein may be implemented in other forms without departing from their spirit and characteristics. The specific embodiments disclosed should be considered exemplary and not limiting. Therefore, the scope of the present disclosure is determined by the appended claims and not by these foregoing descriptions. Any changes within the literal meaning and equivalent range of the claims should be within the scope of these claims.

In the descriptions of this specification, descriptions of a reference term such as "an embodiment", "some embodiments", "an example", "a specific example" or "some examples" means that a feature, structure, material, or characteristic that is described with reference to the embodiment or the example is included in at least one embodiment or example of the present disclosure. In this specification, exemplary descriptions of the foregoing terms do not necessarily refer to the same embodiment or example. In addition, the described specific features, structures, materials, or characteristics may be combined in a proper manner in any one or more of the embodiments or examples.

Although the embodiments of the present disclosure have been shown and described above, it can be understood that, the foregoing embodiments are exemplary and should not be understood as limitation to the present disclosure. A person of ordinary skill in the art can make changes, modifications, replacements, or variations to the foregoing embodiments within the scope of the present disclosure without departing from the principle and purposes of the present disclosure.

## Claims

1. A housing, configured to accommodate an electrode core, the housing comprising a peripheral wall and a first cover plate, the peripheral wall being provided with a first opening, a reserved portion being arranged on a periphery of the first cover plate, the reserved portion being configured to be melted to form a melted edge, and the first cover plate being configured to be bonded with the peripheral wall through the melted edge to close the first opening.

2. The housing according to claim 1, wherein a material of at least one of the peripheral wall and the first cover plate is stainless steel.

3. The housing according to claim 1 or 2, wherein a thickness of the peripheral wall is 30 to 150 µm.

4. The housing according to any one of claims 1 to 3, wherein the reserved portion is a portion of the first cover plate protruding from an outer surface of the peripheral wall along a peripheral direction of the peripheral wall when the first cover plate covers the first opening.

5. The housing according to any one of claims 1 to 4, wherein a height of the reserved portion protruding from the peripheral wall along the peripheral direction of the peripheral wall is 50 µm to 300 µm.

6. The housing according to any one of claims 1 to 5, wherein a boss is arranged on the first cover plate, and a peripheral dimension of the boss is equivalent to that of the first opening, such that when the first cover plate is assembled to the peripheral wall, a periphery of the boss abuts against the peripheral wall.

7. The housing according to claim 6, wherein the first cover plate comprises a first plate body and a second plate body, the reserved portion being arranged on the first plate body, and the second plate body being welded to the first plate body to form the boss.

8. The housing according to claim 7, wherein a thickness of the reserved portion is 30 µm to 300 µm, a thickness of the first plate body is 30 to 200 µm, and a thickness of the second plate body is 100 to 500 µm.

9. The housing according to any one of claims 1 to 8, wherein the housing comprises a second cover plate, and the peripheral wall is provided with a second opening opposite to the first opening, the second cover plate being configured to cover the second opening.

10. The housing according to claim 9, wherein the peripheral wall is substantially in a shape of a cuboid, the peripheral wall comprises two first side plates arranged opposite to each other and two second side plates arranged opposite to each other, and areas of the first opening and the second opening are less than areas of the first side plate and the second side plate.

11. The housing according to claim 10, wherein the peripheral wall is provided with a weld extending to the first opening and the second opening, the area of the first side plate is less than the area of the second side plate, and the weld is provided on the first side plate.

12. The housing according to any one of claims 1 to 11, wherein a relationship between a height H1 of the reserved portion, a reinforcement H2 of the melted edge, a width W of the melted edge, and the T2 thickness of the reserved portion is: H1=(π×(H2+W/2)2-W2)/4T2.

13. A battery, comprising a housing according to any one of claims 1 to 12 and the electrode core accommodated in the housing, the first cover plate being bonded with the peripheral wall through the melted edge to close the first opening.

14. The battery according to claim 13, wherein the reinforcement of the melted edge protruding along the peripheral direction of the peripheral wall is less than 200 µm.

15. An electronic device, comprising a battery according to claim 13 or 14.
